Europäisches Patentamt

European Patent Office

Office européen des brevets

(19)

(11) Veröffentlichungsnummer: **0 216 100**
B1

(12)

# EUROPÄISCHE PATENTSCHRIFT

(45) Veröffentlichungstag der Patentschrift:
24.10.90

(21) Anmeldenummer: 86111061.7

(22) Anmeldetag: 11.08.86

(51) Int. Cl.⁵: **E21B 7/20,** E21B 7/26,
E21B 4/06, E21B 29/10,
E21B 7/28, E21B 10/40

(54) Rammbohrgerät mit Schlagmesserkolben.

(30) Priorität: 24.09.85 DE 3533995

(43) Veröffentlichungstag der Anmeldung:
01.04.87 Patentblatt 87/14

(45) Bekanntmachung des Hinweises auf die Patenterteilung:
24.10.90 Patentblatt 90/43

(84) Benannte Vertragsstaaten:
AT BE CH FR GB IT LI LU NL SE

(56) Entgegenhaltungen:
EP-A- 0 146 331
DE-A- 2 558 842
DE-A- 2 824 915
DE-A- 3 408 244
DE-B- 2 157 259
GB-A- 2 138 532
US-A- 1 372 257

(73) Patentinhaber: Tracto-Technik Paul Schmidt,
Maschinenfabrik GmbH, Reiherstrasse 2,
D-5940 Lennestadt 1 (Saalhausen)(DE)

(72) Der Erfinder hat auf seine Nennung verzichtet

(74) Vertreter: König, Reimar, Dr.-Ing. et al, Patentanwälte
Dr.-Ing. Reimar König Dipl.-Ing. Klaus Bergen
Wilhelm-Tell-Strasse 14 Postfach 260162,
D-4000 Düsseldorf 1(DE)

**Beschreibung**

Die Erfindung bezieht sich auf ein Rammbohrgerät zum grabenlosen Verlegen von Rohrleitungen mit einem im Gerätegehäuse geführten Schlagkolben und einer mit Schlagmessern bestückten Schlagspitze.

Ein pneumatisch angetriebenes Rammbohrgerät der vorerwähnten Art ist aus der deutschen Patentschrift 21 57 259 bekannt; es besitzt eine bewegliche Schlagspitze, auf die der selbststeuernde Kolben periodisch Rammschläge ausübt. Unter dem Einfluß der Rammschläge bewegt sich die über eine Druckfeder am Gerätegehäuse abgestützte Schlagspitze oszillierend in das Erdreich hinein und zieht schließlich, wenn ihr Hub ausgeschöpft ist, das Gehäuse nach.

Die Schlagspitze des Rammbohrgeräts kann als Meißel ausgebildet oder nach der deutschen Offenlegungsschrift 25 58 842 mit messerartigen Schneiden versehen sein, um Bodenhindernisse leichter zertrümmern zu können. Des weiteren können solche Rammbohrgeräte auch am rückwärtigen Ende mit einer Kupplung zum Befestigen eines Nachziehrohrs verbunden sein. Auf diese Weise ist es möglich, auch in mit Hindernissen wie Altrohren durchsetzten Böden grabenlos ein Versorgungsrohr einzuziehen.

Aus der deutschen Patentschrift 28 24 915 ist es auch bekannt, derartige Rammbohrgeräte zum Aufweiten einer Pilotbohrung einzusetzen, bei der es sich auch um eine bereits vorhandene Versorgungsleitung handeln kann. Da das Aufweiten der Versorgungsleitung, beispielsweise eines Gußeisen- oder eines Tonrohrs, eine vorherige Zerstörung voraussetzt, ist es auch bekannt, die Schlagspitze mit radial nach außen weisenden bzw. in der Ebene der Schlagspitzenachse angeordneten Schneiden oder Schalgmessern zu versehen. Die Schneidkanten verlaufen dabei spitzwinklig zur Schlagspitzenachse, so daß sie insgesamt etwa so wie ein Aufweitkonus wirken, mit der Vorwärtsbewegung der Schlagspitze jedoch die Wandung des verlegten Rohrs sprengen.

Da die Schlagspitze mit den Schneiden eine Baueinheit bildet, die entweder Bestandteil eines Rammbohrgeräts oder mit einem Rammgerät verbunden ist, sind von dem Schlagkolben des Rammbohrgeräts oder dem Rammgerät stets gleichzeitig die Vortriebs- und Verdrängungs- sowie die Zertrümmerungsarbeit aufzubringen, was entweder eine erhöhte Schlag- bzw. Rammenergie oder einen langsameren Vortrieb bedingt. Ausserdem reicht die Schlagenergie häufig nicht aus, die nahezu immer vorhandenen Muffenverbindungen zu sprengen.

Der Erfindung liegt daher die Aufgabe zugrunde, ein Rammbohrgerät zu schaffen, das mit geringerer Schlagenergie auskommt und/oder einen rascheren Vortrieb gestattet. Die Lösung dieser Aufgabe basiert auf der Erkenntnis, daß ein Gerätevortrieb erst dann möglich ist, wenn die Zertrümmerungsarbeit geleistet ist.

Demgemäß besteht die Lehre der Erfindung darin, das Rammbohrgerät in zwei in Grenzen unabhängig voneinander bewegliche Teile aufzugliedern.

Im einzelnen besteht die Erfindung darin, daß bei einem Rammbohrgerät der eingangs erwähnten Art in der Schlagspitze achsparallel bewegliche, vom Schlagkolben beaufschlagte Schlagmesser angeordnet sind. Der Schlagkolben gibt dabei seine Schlagenergie zunächst überwiegend oder auch ganz an die Schlagmesser und erst dann, wenn die Schlagmesser die Zertrümmerungsarbeit geleistet haben und ihnen kein nennenswerter Rohr- bzw. Bodenwiderstand mehr entgegensteht, an die Schlagspitze bzw. das Gerätegehäuse ab.

Somit werden bei dem erfindungsgemäßen Rammbohrgerät zunächst nur die Schlagmesser beaufschlagt und in das zu zerstörende Altrohr und das umgebende Erdreich eingetrieben, während das Gerät mit seiner Schlagspitze als solches im wesentlichen in unveränderter Lage verharrt. Erst wenn - zumeist nach mehreren Rammschlägen - ein Rohrstück und etwaige sonstige Bodenhindernisse zertrümmert sind, bewegt sich das Gerät mit seiner Schlagspitze in das von den Schlagmessern aufgelockerte Erdreich und die Rohrtrümmer vorwärts. Somit wechseln sich bei dem erfindungsgemäßen Rammbohrgerät Zertrümmerungs- und Vortriebs- bzw. Verdrängungsarbeit ständig ab. Damit ist der Vorteil verbunden, daß sowohl für die Zertrümmerungsarbeit als auch für die Verdrängungs- bzw. Vortriebsarbeit stets ein Maximum an Schlagenergie zur Verfügung steht.

Vorzugsweise ist bei dem erfindungsgemäßen Rammbohrgerät in einer Bohrung der Schlagspitze ein mit den Schlagmessern in Wirkverbindung stehender Schlagdorn geführt, auf dessen rückwärtiges Ende der Schlagkolben seine volle Energie abgibt, bis die Zertrümmerungsarbeit geleistet ist und der Schalgkolben auf eine dann die Schlagenergie aufnehmende Anschlagschulter trifft.

Andererseits kann der Schlagdorn aber auch an seinem rückwärtigen Ende mit einem Kopf versehen sein, der die Schlagkolbenenergie nach Beeindigung der Zertrümmerungsarbeit auf die Anschlagschulter überträgt.

Die Schlagmesser können als Doppelmesser ausgebildet sein und durch Schlitze in der Mantelfläche der Schlagspitze ragen; sie weisen alsdann wie Leitflossen radial nach außen und oszillieren während der Zertrümmerungsarbeit längs der Geräteachse in den Schlitzen, deren Länge dem maximalen Messerhub entspricht. Das vordere Ende des Schlagdorns greift vorzugsweise in eine rückwärtige Ausnehmung des Doppelmessers ein.

Um eine vibrierende Messerarbeit nach Art eines Schlagbohrers zu erreichen, kann das Doppelmesser mit einem Führungsschlitz auf einem Innenzapfen der Schlagspitze geführt und über eine Druckfeder gegen die Schlagspitze abgestützt sein. Das hat zur Folge, daß sich die Messer nach jedem Schlag unter dem Einfluß der Druckfeder um ein kurzes Stück zurückbewegen, um alsdann beim nächsten Kolbenschlag wieder auf das zu zertrümmernde Rohr zu treffen. Die Zertrümmerung des Rohrs findet daher als hochfrequentes Schlagschneiden und demzufolge mit hoher Effektivität statt.

Um gleichzeitig mit dem Zertrümmern des Altrohrs ein neues Rohr einziehen zu können, weist das Rammbohrgerät am rückwärtigen Ende entweder eine Rohrkupplung auf oder es ist von einem Mantelrohr mit einer Kupplung bzw. Aufnahme für das Nachziehrohr verbunden. Dabei kann das Mantelrohr eine konische Spitze aufweisen, mit deren Hilfe die von der Schlagspitze geschaffene Erdbohrung aufgeweitet und dabei auf einen geringfügig größeren Durchmesser als das Nachziehrohr gebracht wird. Auf diese Weise ist ein leichtes und reibungsarmes Einziehen des Nachziehrohrs bzw. der neuen Versorgungsleitung möglich.

Die Erfindung wird nachfolgend anhand zweier in der Zeichnung dargestellter Ausführungsbeispiele des näheren erläutert. In der Zeichnung zeigen:

Fig. 1 einen axialen Längsschnitt durch ein Altrohr und ein Rammbohrgerät nach der Erfindung,

Fig. 2 das Rammbohrgerät gemäß Fig. 1, jedoch mit einem anderen Schlagdorn,

Fig. 3 eine Draufsicht auf das Rammbohrgerät der Fig. 1 oder der Fig. 2 und

Fig. 4 eine Explosionsdarstellung der Schlagspitze des Geräts nach Fig. 2 mit dem Mantelrohr.

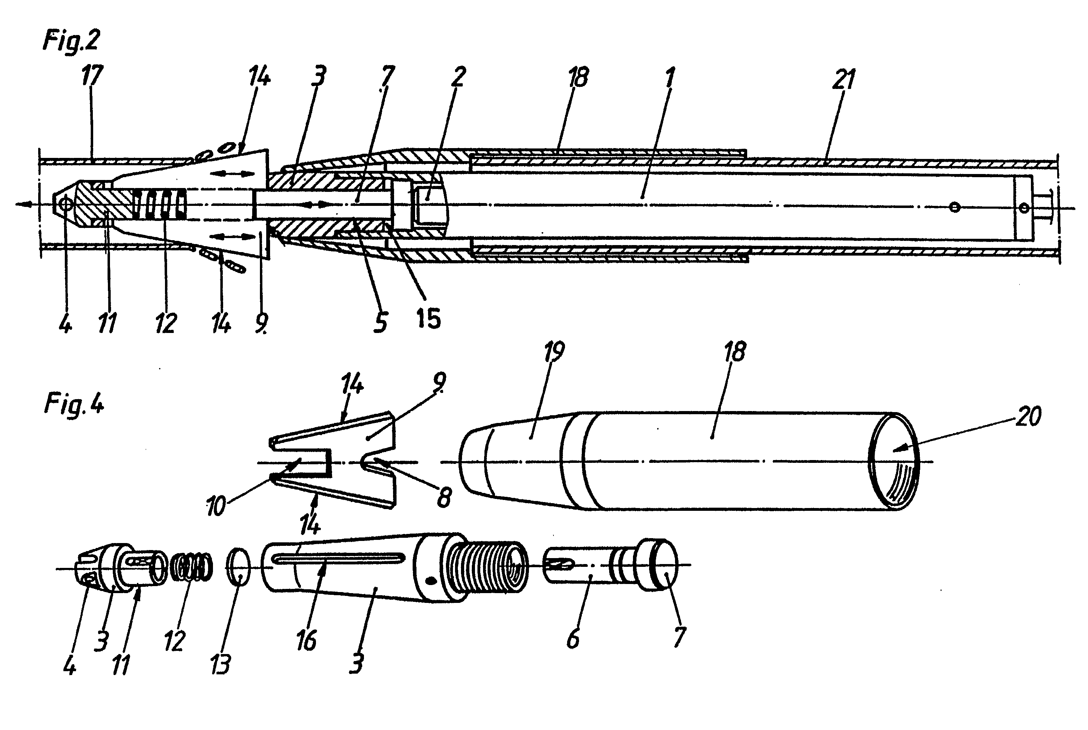

Das erfindungsgemäße Rammbohrgerät besteht aus einem Gehäuse 1 mit einem selbststeuernden Schlagkolben und wird über eine Leitung mit Druckluft versorgt. Im vorderen Teil des Gehäuses 1 ist eine Schlagspitze 3 mit einer Öse 4 zum Einhängen eines Zugseils gelagert. Die Schlagspitze weist eine zentrische Bohrung 5 als Führung für einen Schlagdorn 6 auf, der bei dem Ausführungsbeispiel nach Fig. 2 am rückwärtigen Ende mit einem Kopf 7 versehen ist und mit seinem vorderen Ende in die Ausnehmung 8 eines in der Schlagspitze 3 beweglich gelagerten Doppelmessers 9 eingreift. Das Doppelmesser ist mit einem vorderen Führungsschlitz 10 auf einem Innendorn 11 der Schlagspitze 3 geführt und mittels einer Druckfeder 12 und einer Federplatte 13 an diesem Innendorn abgestützt.

Im Gehäuseinnern bildet das rückwärtige Ende der Schlagspitze 3 eine Anschlagschulter 15 für den Schlagkolben 2.

Das Doppelmesser 9 ist mit zwei einander gegenüberliegenden und durch Schlitze 16 in der Schlagspitze 3 ragenden Schlagmessern 14 versehen, die zum Zertrümmern eines Altrohrs 17 dienen. Auf dem rückwärtigen Teil der Schlagspitze sitzt aussen die konische Spitze eines das Rammbohrgerät 1 umgebenden Mantelrohrs 18 mit einer Spitze 19 und einer Aufnahme 20 für ein Nachziehrohr bzw. die neu zu verlegende Leitung.

Beim grabenlosen Einziehen einer neuen Versorgungsleitung 21 bewegt sich der Schlagkolben 2 unter dem Einfluß der ihm über eine Leitung zugeführten Druckluft ständig zwischen dem Schlagdorn 6 bzw. dessen Kopf 7 einerseits und einer rückwärtigen Endstellung im Gehäuse 1 hin und her; er gibt seine Energie beim Auftreffen auf den Schlagdorn 6 oder dessen Kopf 7 zunächst über den Dorn 6 und das Doppelmesser 9 ausschließlich an die Schlagmesser 14 ab.

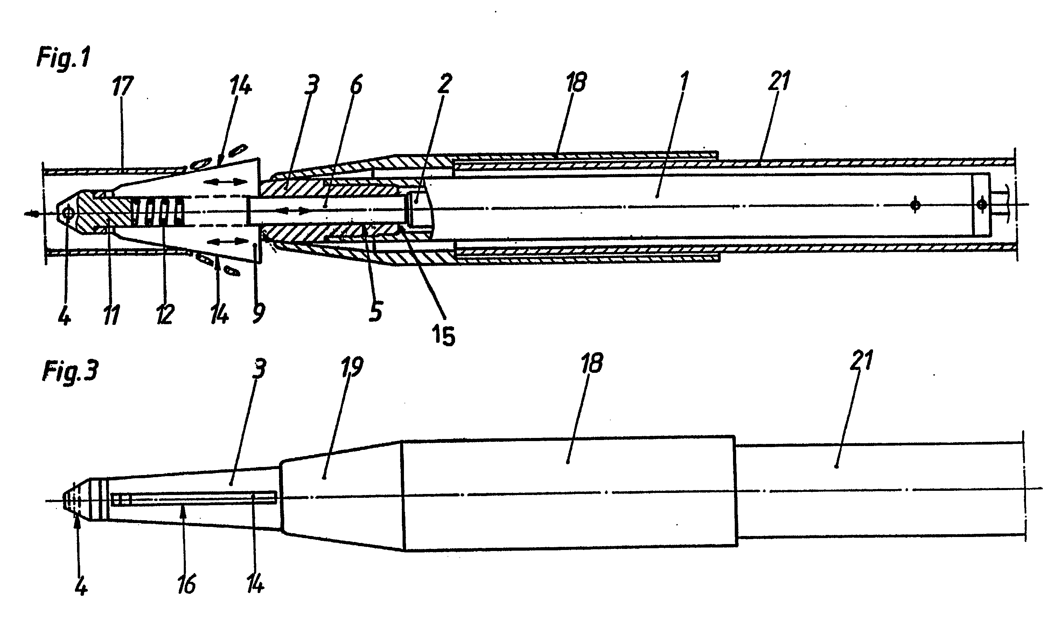

Je mehr das Altrohr 17 zertrümmert wird, desto weiter können sich die Schlagmesser 14 unter dem Einfluß der Rammschläge des Schlagkolbens 2 gegen den Druck der Feder 12 vorwärtsbewegen, bis schließlich der Schlagkolben 2 im Falle des Ausführungsbeispiels der Fig. 1 oder der Dornkopf 7 im Falle des Ausführungsbeispiels der Fig. 2 auf die Anschlagschulter 15 trifft. Der Schlagkolben gibt dann seine Energie im wesentlichen an die Schlagspitze 3 und damit an das Gehäuse 1 ab. Das Gehäuse bewegt sich alsdann schrittweise mit seiner Schlagspitze 3 so weit in den zertrümmerten Teil des Altrohrs 17 hinein, bis die Schlagmesser 14 auf das noch unzertrümmerte Rohrende treffen und ihre in den Fig. 1 bis 3 dargestellte rückwärtige Ausgangsstellung wieder einnehmen. Alsdann überragt der Schlagdorn wieder die Anschlagschulter, bis wiederum ein Teil des Altrohrs zertrümmert ist und der Schlagkolben 2 bzw. der Dornkopf 7 erneut auf die Anschlagschulter 15 trifft.

Somit bewegen sich die Schlagmesser 14 unter dem Einfluß der Druckfeder 12 und eines ggf. an der Öse 4 angreifenden Zugseils einerseits und des Schlagkolbens 2 andererseits während der Zertrümmerungsphase ständig im Rhythmus der Schlagkolbenbewegung hin und her, während das Gerät 1 mit seiner Schlagspitze 3 im wesentlichen in Ruhe verharrt, bis die Zertrümmerungsarbeit geleistet ist und sich alsdann das Gerät 1 und die Schlagspitze 3 unter dem Einfluß des auf die Anschlagschulter 15 treffenden Schlagkolbens 2 unter gleichzeitiger Verdrängung des vor der Schlagspitze 3 und der Mantelrohrspitze 19 befindlichen Erdreichs schrittweise vorwärtsbewegt, ohne daß Zertrümmerungsarbeit geleistet wird. Demgemäß vollzieht sich das Verlegen einer neuen Versorgungsleitung in zwei getrennten Phasen, einer Zertrümmerungsphase bei ruhendem Gerät und einer Vortriebs- und Verdrängungsphase, während derer Zertrümmerungsarbeit nicht geleistet wird.

**Patentansprüche**

1. Rammbohrgerät zum grabenlosen Verlegen von Rohrleitungen mit einem im Gerätegehäuse (1) geführten Schlagkolben (2) und einer mit Schlagmessern (14) bestückten Schlagspitze (3), gekennzeichnet durch in der Schlagspitze (3) achsparallel bewegliche, von dem Schlagkolben (2) beaufschlagte Schlagmesser (14).

2. Rammbohrgerät nach Anspruch 1, dadurch gekennzeichnet, daß in einer Bohrung (5) der Schlagspitze (3) ein mit den Schlagmessern (14) in Wirkverbindung stehender Schlagdorn (6) geführt ist.

3. Rammbohrgerät nach Anspruch 1 oder 2, dadurch gekennzeichnet, daß das vordere Ende des Schlagdorns (6) in eine rückwärtige Ausnehmung (8) eines Doppelmessers (9) eingreift.

4. Rammbohrgerät nach einem oder mehreren der Ansprüche 1 bis 3, dadurch gekennzeichnet, daß die Dornführung oder das Gehäuse (1) mit einer Anschlagschulter (15) versehen ist.

5. Rammbohrgerät nach einem oder mehreren der Ansprüche 2 bis 4, dadurch gekennzeichnet, daß

der Schlagdorn (6) an seinem rückwärtigen Ende mit einem Kopf (7) versehen ist.

6. Rammbohrgerät nach einem oder mehreren der Ansprüche 1 bis 5, dadurch gekennzeichnet, daß die Schlagmesser (14) durch Schlitze (16) in der Mantelfläche der Schlagspitze (3) ragen.

7. Rammbohrgerät nach einem oder mehreren der Ansprüche 3 bis 6, dadurch gekennzeichnet, daß das Doppelmesser (9) mit einem Führungsschlitz (10) auf einem Innenzapfen (11) der Schlagspitze (3) geführt und über eine Druckfeder (12) gegen die Schlagspitze abgestützt ist.

8. Rammbohrgerät nach einem oder mehreren der Ansprüche 1 bis 7, gekennzeichnet durch ein das Gehäuse mindestens teilweise umgebendes Mantelrohr (18) mit einer Aufnahme (20) für ein Nachziehrohr (21).

9. Rammbohrgerät nach Anspruch 8, gekennzeichnet durch ein Mantelrohr (18) mit konischer Spitze (19).

10. Rammbohrgerät nach einem oder mehreren der Ansprüche 1 bis 9, dadurch gekennzeichnet, daß die Schlagspitze (3) mit einer Öse (4) versehen ist.

## Claims

1. A ram boring machine for laying pipelines without trenching, having a striker piston (2) guided in the housing (1) of the machine and an impact tip (3) provided with impact blades (14), characterised in that the impact blades (14) are moveable in the impact tip (3) parallel to its axis and are acted upon by the striker piston (2).

2. A ram boring machine according to claim 1, characterised in that an anvil bar (6) operatively connected to the impact blades (14) is guided in a hole (5) bored in the impact tip (3).

3. A ram boring machine according to claim 1 or claim 2, characterised in that the front end of the anvil bar (6) engages in a recess (8) in the rear of a double blade (9).

4. A ram boring machine according to any one or more of claims 1 to 3, characterised in that the anvil bar guide or the housing (1) is provided with a stop shoulder (15).

5. A ram boring machine according to any one or more of claims 2 to 4, characterised in that the anvil bar (6) is provided with a head (7) at its rear end.

6. A ram boring machine according to any one or more of claims 1 to 5, characterised in that the impact blades (14) project through slots (16) in the surface of the casing of the impact tip (3).

7. A ram boring machine according to any one or more of claims 3 to 6, characterised in that the double blade (9) is guided by a guide slot (10) on a spigot (11) inside the impact tip (3) and is buffered against the impact tip (3) via a compression spring (12).

8. A ram boring machine according to any one or more of claims 1 to 7, characterised by a tubular casing (18) at least partly surrounding the housing and having a holder (20) for a follow-up pipe (21).

9. A ram boring machine according to claim 8, characterised in that the tubular casing (18) has a conical tip (19).

10. A ram boring machine according to any one or more of claims 1 to 9, characterised in that the impact tip (3) is provided with an eye (4).

## Revendications

1. Mouton de forage pour la mise en place sans ouverture de tranchées de canalisations tubulaires qui comporte un piston de percussion (2) guidé dans l'enveloppe (1) de l'appareil et une pointe de percussion (3) garnie d'outils de coupe percutants (14), caractérisé par des outils de coupe percutants (14) qui se déplacent parallèlement à l'axe dans la pointe de percussion (3) sous l'action du piston de percussion.

2. Mouton de forage selon la revendication 1, caractérisé en ce qu'il comporte, guidé dans un alésage (5) de la pointe de percussion (3), un mandrin de percussion (6) qui coopère avec les outils de coupe percutants (14).

3. Mouton de forage selon l'une des revendications 1 ou 2, caractérisé en ce que l'extrémité avant du mandrin de percussion (6) s'engage dans un évidement arrière (8) d'un outil de coupe double (9).

4. Mouton de forage selon une ou plusieurs des revendications 1 à 3, caractérisé en ce que le dispositif de guidage du mandrin ou l'enveloppe (1) comportent un épaulement de butée (15).

5. Mouton de forage selon une ou plusieurs des revendications 2 à 4, caractérisé en ce que le mandrin de percussion (6) comporte, à son extrémité arrière, une tête (7).

6. Mouton de forage selon une ou plusieurs des revendications 1 à 5, caractérisé en ce que les outils de coupe percutants (14) traversent des fentes (16) de la surface d'enveloppe de la pointe de percussion (3) pour la dépasser.

7. Mouton de forage selon une ou plusieurs des revendications 3 à 6, caractérisé en ce que l'outil de coupe (9) est guidé par une fente de guidage (10) sur un tenon intérieur (11) de la pointe de percussion (3) et prend appui, par l'intermédiaire d'un ressort de compression, (12) sur la pointe de percussion.

8. Mouton de forage selon une ou plusieurs des revendications 1 à 7, caractérisé par un tube d'enveloppe (18) qui entoure au moins partiellement l'enveloppe et comporte un dispositif de réception (20) pour un tube entraîné (21).

9. Mouton de forage selon la revendication 8, caractérisé par un tube d'enveloppe (18) comportant une pointe conique (19).

10. Mouton de forage selon une ou plusieurs des revendications 1 à 9, caractérisé en ce que la pointe de percussion (3) comporte un œillet (4).

Fig.1

17　14　3　6　2　18　1　21

4　11　12　14　9　5　15

EP 0 216 100 B1

Fig.3

3　19　18　21

4　16　14

Fig.2

Fig.4